# EUROPEAN PATENT SPECIFICATION

(11) **EP 2 793 546 B1**
(45) Date of publication and mention of the grant of the patent: **25.05.2016**
(21) Application number: 12794277.9
(22) Date of filing: 22.11.2012
(51) Int. Cl.: A01D 75/18, A01F 29/16, A01D 43/10

(54) **CROP PROCESSING ROLLER ASSEMBLY**
ROLLENANORDNUNG ZUR BEARBEITUNG VON ERNTEGUT
ASSEMBLAGE DE ROULEAUX POUR LE TRAITEMENT DE LA RECOLTE

(30) Priority: 19.12.2011 GB 201121758
(43) Date of publication of application: 29.10.2014
(73) Proprietor: AGCO International GmbH, 8212 Neuhausen am Rheinfall (CH)
(72) Inventor: DREER, Constantin, 89257 Illertissen (DE)
(74) Representative: AGCO Intellectual Property Department
(86) International application number: PCT/EP2012/073410
(87) International publication number: WO 2013/092107

(56) References cited:
- EP-A2- 1 762 134
- DE-A1- 3 019 166
- US-A- 4 322 937
- US-A- 4 758 788

## Description

This invention relates to crop processing rollers for use in forage harvesters or other agricultural harvesting machines such as combine harvesters.

It is well known in such machines for the cut crop to be conveyed to a crop processing means by a system of feed rollers which normally includes some type of foreign object detection means to detect if a foreign object, which is likely to damage the crop processing unit or contaminate the processed crop, is being conveyed towards the crop processing means by the feed rollers.

Since such foreign object detection means normally include one or more sensors and use variations in a magnetic field provided by the detection means to indicate the presence of a foreign body, the rollers which are normally made from high quality metal to avoid corrosion, also need to be non-magnetic to avoid interference with the operation of the detection means sensors.

This leads to such metal rollers being extremely expensive to construct as welding of appropriate metals may be problematical and expensive high temperature annealing of the rollers may be necessary to avoid the rollers becoming magnetised. Also machining of the rollers to their final size and shape may again introduce the prospect of the rollers becoming magnetised.

US 4,758,788 discloses a crop processing roller assembly according to the preamble of claim 1.

It is an object of the present invention to provide an improved form of crop processing roller assembly which overcomes the above problems.

Thus according to the present invention there is provided a crop processing roller assembly for an agricultural harvesting machine, the assembly including a roller comprising a main cylindrical body portion supported for rotation about a support shaft, the cylindrical body portion being formed from plastics material and carrying crop processing members at circumferentially spaced locations around the body portion, the assembly further comprising foreign object detector means wherein the roller is provided within a scanning range of the foreign object detector means.

Each end of the main cylindrical body portion is supported from the shaft via a radially extending disc. The main cylindrical body portion is constructed from a series of axial extending circumferential adjacent body members which are secured at each end to the respective radially extend discs.

Suitably, the foreign object detector means is a non-rotating foreign object detector means disposed inside the cylindrical body portion.

Such a crop processing roller avoids the problems discussed above of the roller becoming magnetised, leading to reduced disturbance of the foreign object detector means by a roller which may also be lighter and cheaper to manufacture.

The main cylindrical body portion may be made from reinforced plastics material by a wrapping process involving the wrapping of layers of reinforcing material with resin therebetween, the resulting wrapped body portion being cured and then being machined to the required finished shape if required.

In an alternative arrangement the main cylindrical body portion may be made from reinforced plastics material by inserting reinforced material into a mould and adding plastics material into the mould, the resulting moulded body portion then being machined to the required finished shape if required.

The radially extending discs may also be made from plastics material.

Conveniently the radially extending discs may be screwed or otherwise secured to the ends of the cylindrical body portion.

The crop processing members may comprise non-magnetisable bars which are screwed or otherwise secured to the cylindrical body portion by non-magnetisable parts.

The bars may also conveniently be made from plastics material. The screws or other fasteners conveniently engage inserts provided in the cylindrical body portion.

The crop processing means may include toothed parts which extend radially beyond the bars and are screwed or secured thereto.

Between each bar may be provided an axially extending substantially Z-shaped cross section crop guidance part with each end of the Z-shaped part being secured to a circumferentially adjacent bar.

The crop processing members may be formed integrally with the main cylindrical body portion.

The main cylindrical body portion may be provided with axially extending circumferentially spaced valleys, one side of each valley supporting a radially extending crop processing part which is screwed or otherwise secured to the valley side.

The valleys may be integrally formed in the main cylindrical body portion.

Alternatively the valleys may be formed by separate valley members that are screwed or other secured to the external surface of the main cylindrical body portion.

Adjacent body members may overlap each other circumferentially along their axially extending edges for improved rigidity of the roller.

Each body member may be provided with a valley side for support of the associated crop processing part and a guidance surface which slopes towards the valley side of the adjacent body member.

Each body member may be secured to its respective discs by screws or other fasteners which extend through the respective body member and an overlapped portion of the guidance surface of the adjacent body member.

The invention also provides a crop harvesting machine provided with a crop processing roller assembly as described above.

The present invention will now be described with reference to and as shown in the accompanying drawings:-
Figure 1 shows a perspective view of an intake housing of a forage harvester which is provided with a prior art set of metal feed rollers with the rollers moved apart for maintenance or cleaning;
Figure 2 shows a perspective view of the prior art feed rollers of Figure 1 on their own;
Figure 3 shows an exploded perspective view of a plastics feed roller in accordance with aspects of the present invention;
Figures 4.1 to 4.4 show an axial section through and detail views of parts of the roller of Figure 3;

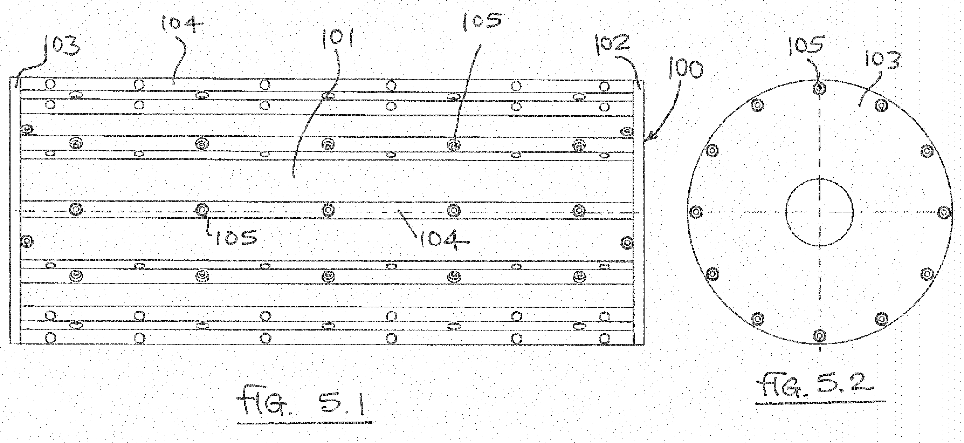

Figures 5.1 and 5.2 show side and end views of the roller of Figure 3;
Figures 6.1 and 6.2 show sectional details of a foreign body detection means used inside the roller of Figure 3;
Figures 7.1 and 7.2 show details of a still further form of roller construction in accordance with aspects of the present invention;
Figure 8 shows a reversible crop processing bar arrangement for use in a crop processing roller assembly in accordance with the present invention, and
Figures 9.1 to 9.6 show further examples of alternative forms of roller construction which can be used in a roller assembly in accordance with the present invention.

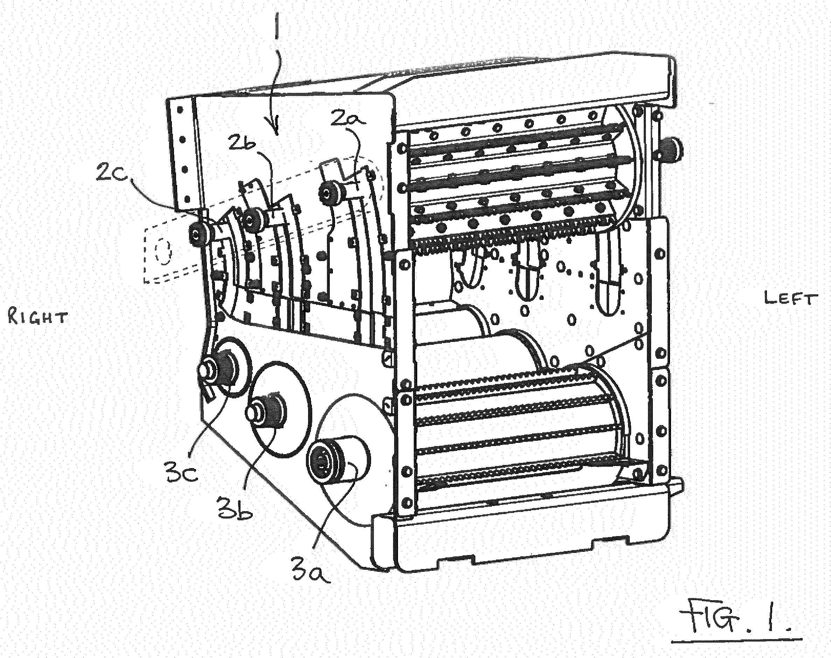

Referring to the drawings Figure 1 shows an intake housing 1 for a typical prior art forage harvester which supports three metal upper rollers 2a,2b,2c and three metal lower rollers 3a,3b,3c as described in, for example, the Applicant's co-pending applications GB0917733.8 and GB 0917734.6.

The upper rollers are a prepress roller 2a, an intermediate roller 2b and a press roller 2c which are driven on left hand side by a transmission arrangement (in a support structure not shown) and supported on right hand side by a supporting arm (also not shown). Both transmission support structure and the supporting arm are pivotable towards and away from each other for adjustment depending on crop and the required chopping length of the crop.

The lower rollers comprise an intake roller 3a, an intermediate roller 3b and a plain roller 3c. Again the lower rollers 3a,3b,3c are driven on right hand side by a transmission arrangement (in a support structure) and supported on left hand side by a supporting arm. Both are fixed to the intake housing 1 and do not move.

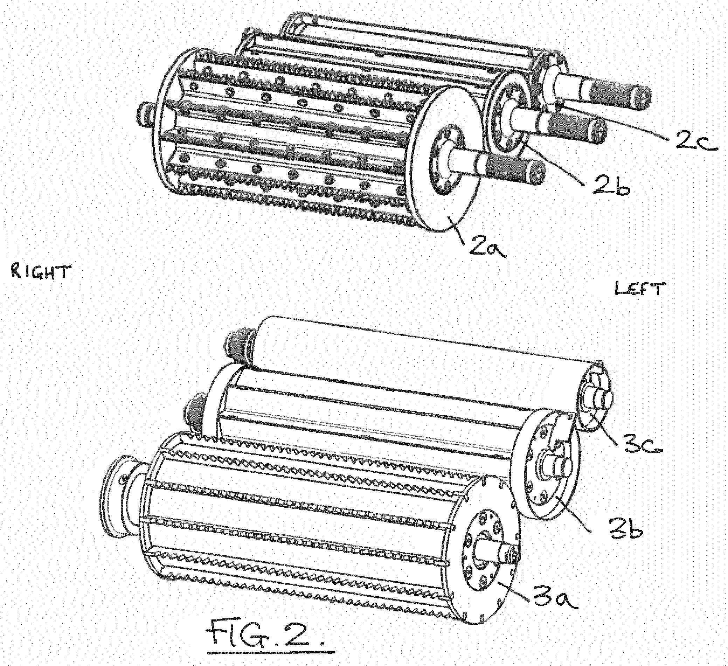

Figure 2 shows the prior art rollers without the housing and with the distance between the upper rollers 2a,2b,2c and lower rollers 3a,3b,3c enlarged to avoid overlapping and give greater clarity. The rollers shown in Figures 1 and 2 are of the conventional metal construction and are used to illustrate the disposition of the rollers to indicate the typical working environment of a crop processing roller in accordance with the present invention.

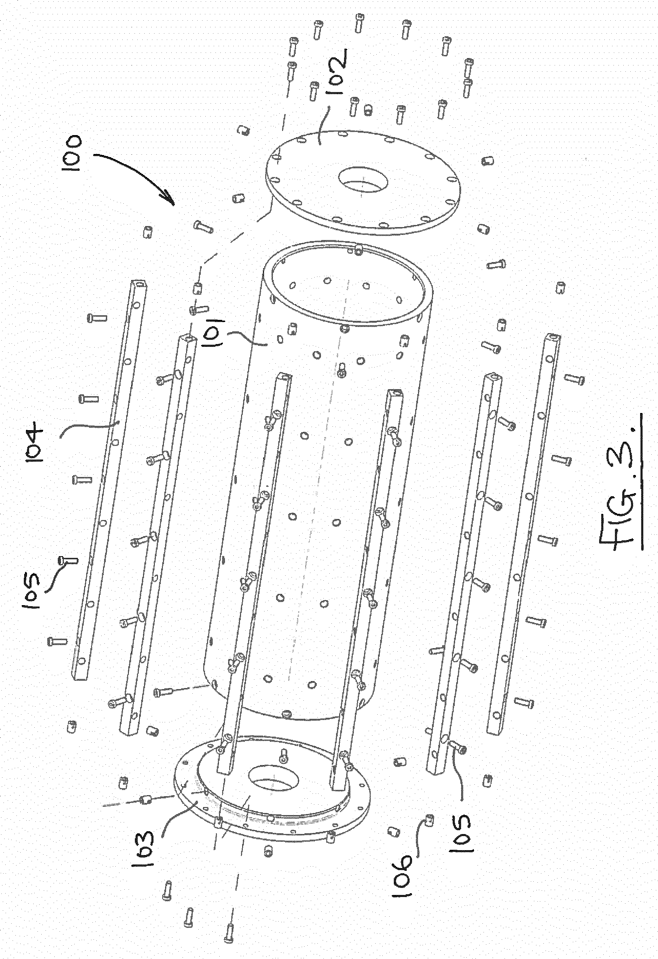

Figure 3 shows a roller for use with the present invention. In the illustrated example, the prepress roller 2a and intake roller 3a are based on one plastic roller assembly 100 described below.

The plastic roller assembly 100 comprises mainly a cylindrical body portion 101, two end discs 102,103 of same shape and crop processing members in the form of axially extending bars 104.

The cylindrical body 101 is made of carbon-fibre-reinforced plastics (CFRP) or carbon fibre laminate by, for example, the following procedure.

A pipe shaped mandrel having an outer diameter equal to the inner diameter of cylindrical body 101 is rotated. During rotation, a carbon fibre mat from a coil is wrapped around the tool pipe and phenolic resin is applied in between the layers.

Depending on strength requirements, the mats are wrapped inclined to the rotations axis to achieve overlapping layers interconnected by the resin. After the required wall thickness is reached, wrapping is stopped, the mat is cut and the resin is hardened in an autoclave oven at about 800-900°C in an inert gas (e.g. nitrogen). After hardening, the pipe shaped mandrel is pulled out and mating surfaces and bores are machined on appropriate machine tooling.

Alternatively, the tube body may be made by injection moulding with fibre mats laid in the mould tool.

The end discs can also be made of CFRP or high-tensile plastic material. For example, high-tensile polyoxymethylene (POM) flat material may be used which is cut with water jets and then machined to the required shape and the necessary bores added afterwards. POM may also be injection moulded into a disc shape but this requires a relatively high tooling investment.

Alternatively, a CFRP flat material may be used which is made by stacking carbon fibre mats in layers and applying resin. If the mats are stacked at an angle relative to each other strength is increased. After hardening in the autoclave oven, the discs can be cut with water jet and shaped and the required bores are machined.

Similar, also the bars 104 can be made of CFRP or POM. Further more, there are many other thermoplastic or duroplastic high-tensile materials which may be used. This depends on the volume of units per year required and on the money available for investment in tooling costs.

The assembly of the plastic roller assembly 100 is a mixture of gluing and screwing. If screws 105 are used, the parts are equipped with plastic thread inserts 106.The inserts 106 have an outer thread which is designed for better engagement with the plastic roller materials, in addition glue may be applied. Other technology may allow the placing of the inserts during injection moulding etc.

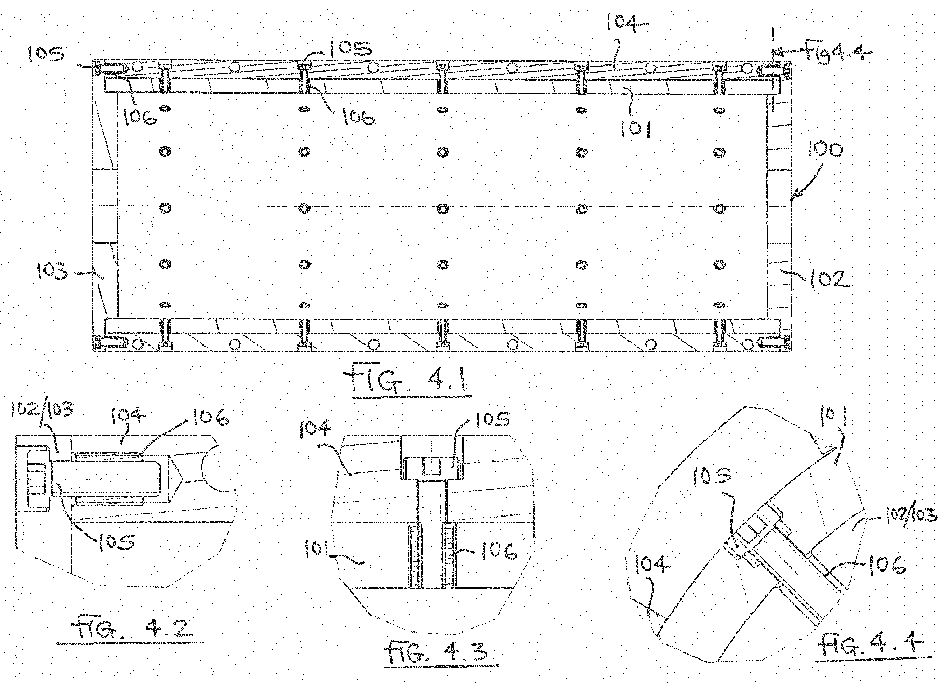

Fig 4.1 to 4.4 shows the connection of the main parts whereby Fig. 4.2 shows connection between end discs 102,103 and bar 104, while Fig.4.3 shows connection of bars 104 with cylindrical body 101. Fig. 4.4 shows a section through the connection between the cylindrical body 101 and end discs 102,103.

The bars 104 are of rectangular shape without any teeth. If teeth are needed for certain crops these can be made by moulded into bars 104 or can be machined into the bars after manufacture or assembly.

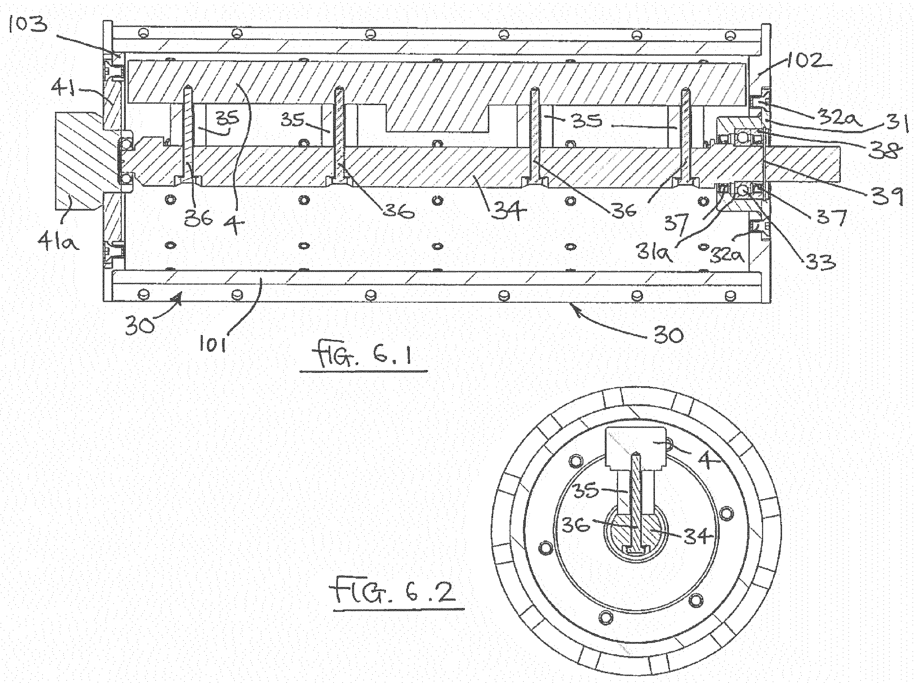

Figures 6.1 and 6.2 show the main assembly of the plastic intake roller 3a. The main assembly 30 of the intake roller 3a on the left side contains a bearing part 31 which is screwed to the respective disc 102 of plastic roller assembly 100 by screws 32a. The bearing part 31 houses ball bearings 33 rotatably mounted on shaft 34. Metal detector 4 is attached to the shaft 34 by distance pieces 35 and screws 36 and does not rote. On both sides of ball bearings 33, shaft seals 37 are provided to avoid debris entering. Ball bearing 33 is fixed against a shoulder 31 a in bearing part 31 by a distance ring 38 and a snap ring 39.

On the right side, a connecting member 41 is screwed to the respective disc 103 of plastic roller assembly 100 by screws 32b. Member 41 is driven via member 41a from a gearbox (not shown). The connection between member 41 a and the gearbox allows slight misalignment so that the intake rollers can be connected and disconnected with the minimum disassembling of the gear box. The intake rollers can also be taken away via the front side of the intake housing.

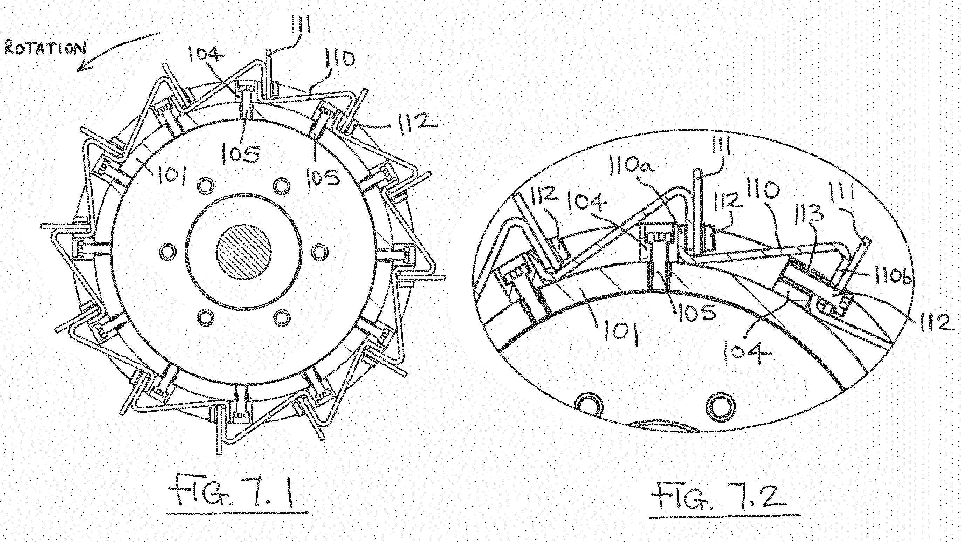

The plastic type prepress roller 2a is basically of the same construction as the intake roller 3a with some additional components shown in Figures 7.1 and 7.2.

Roller 2a has guidance and wear parts 110 and prepress bars 111 conjointly attached to bars 104 by screws 112 which engage with inserts 113.

Guidance and wear parts 110 are of z-shape with a first limb 110a for connection with one adjacent bar 104 and extending radially outwardly and a second limb 110b extending radially inwardly for attachment to the other adjacent bar 104. The ascending shape of the guidance and wear part 110 between limbs 110a and 110b compress the crop during rotation.

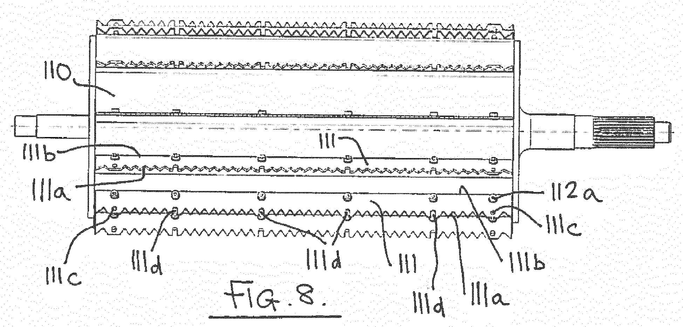

Figure 8 shows that prepress bars 111 can be turned about 180° as different shapes are needed for different kinds of crops. For example the toothed contour 111 a is provided along one edge of the bar 111 for use when harvesting maize while a plain contour 111b is provided along the other edge of each bar 111 for use with grass. Therefore the prepress bars 111 are equipped with two bores 111c on both end sides and four bores 111d which are opened towards the longitudinal side. This eases the assembly as only the respective screws 112a engaging with the closed bore 111c have to be disassembled while the screws 112a engaging into opened bores 111d have to be loosened. This also makes sure that guidance and wear part 110 is retained in position during exchange/rotation of prepress bars 111.

Prepress bars 111 still require special heat treatment as described above but the parts are very small compared to the complete roller body and thereby relatively cheap and easy to provide.

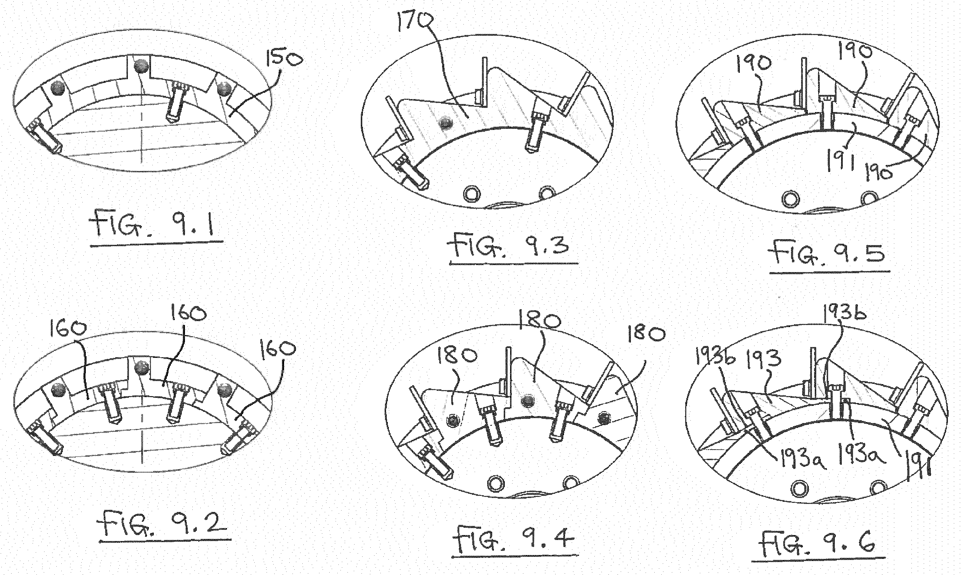

Figures 9.1 and 9.2 shows alternative plastic roller designs suitable for use as the intake roller 30/3a described above. Figures 9.3 to 9.6 are alternative designs which may be suitable for usage as prepress roller 2a.

In Figure 9.1 the formerly described separate bars 104 are formed as an integrated part of cylindrical body 150 of plastic roller assembly which could be made by adding bar-shaped parts into the process during laminating the tube body with resin. Other processes described above could also be used. Furthermore, tube body 150 could be laminated with an increased diameter and shape could be machined to provide the integral bars. Fixation between the components cylindrical body 150 and the end discs is similar to basic design described above with a combination of screw connection and glue application.

In Figure 9.2 the formerly described bars 104 are an integrated part of tube part 160 of plastic roller assembly whereby twelve part cylindrical parts 160 are assembled on the circumference of the end discs to form the cylindrical body. Fixation between the components is similar to basic design described above with a combination of screw connection and glue application.

In Figure 9.3 the formerly described bars 104 (of plastic roller assembly 100) and guidance and wear part 110 (of prepress roller 70) are an integrated part of tube body 170 of the plastic roller assembly which could be made by adding bar-shaped parts into the process during laminating the cylindrical body with resin. Other processes described above could also be used. Furthermore, tube body 170 could be laminated with increased diameter and the shape could be machined. Fixation between the components is similar to basic design described above with a combination of screw connection and glue application.

In Figure 9.4 the formerly described bars 104 and guidance and wear part 110 are an integrated part of cylindrical part 180 of plastic roller assembly whereby twelve part cylindrical parts 180 are assembled on the circumference of the end discs to form the cylindrical body. Fixation between the components is similar to basic design described above with a combination of screw connection and glue application.

In Figure 9.5 the formerly described guidance and wear parts 110 are an integrated part of bars 190 attached to tube body 191 of plastic roller assembly whereby twelve part cylindrical bars 190 are assembled on the circumference of end discs to form a cylindrical body portion. Fixation between the components is similar to basic design described above with a combination of screw connection and glue application.

The arrangement shown in Figure 9.6 is similar to that shown in Figure 9.5 except that each bar 193 has an overlapping contour 193a engaging with a pocket 193b of the next bar to improve fixation of the parts.

In the embodiments shown in Figure 9.2, Figure 9.4, Figure 9.5 and Figure 9.6 the adjacent parts which form the cylindrical body portion could also be provided with inter engaging dovetail connections which are assembled by sliding together and then afterwards attached to end discs.

As will be appreciated, the plastics roller construction described above can be used for the manufacture of any of the upper or lower rollers 2a, 2b, 2c or 3a, 3b, 3c or indeed any similar roller for use in a harvesting machine such as a forage harvester or a combine harvester.

## Claims

1. A crop processing roller assembly for an agricultural harvesting machine, the assembly including a roller comprising a main cylindrical body portion supported for rotation about a support shaft, the cylindrical body portion being formed from plastics material and carrying crop processing members at circumferentially spaced locations around the body portion, the assembly further comprising foreign object detector means wherein the roller is provided within a scanning range of the foreign object detector means wherein each end of said roller main cylindrical body portion is supported from the shaft via a respective radially extending disc **characterised in that** the main cylindrical body portion is constructed from a series of axial extending circumferential adjacent body members which are secured at each end to the respective radially extend discs.

2. An assembly according to claim 1 wherein the foreign object detector means is a non rotating foreign object detector means disposed inside the cylindrical body portion.

3. An assembly according to claim 1 or claim 2 in which the roller main cylindrical body portion is made from reinforced plastics material by a wrapping process involving the wrapping of layers of reinforcing material with resin therebetween, the resulting wrapped body portion being cured and then being machined to the required finished shape if required.

4. An assembly according to claim 1 or claim 2 in which the roller main cylindrical body portion is made from reinforced plastics material by inserting reinforced material into a mould and adding plastics material into the mould, the resulting moulded body portion then being machined to the required finished shape if required.

5. An assembly according to any preceding claim in which the radially extending discs are also made from plastics material.

6. An assembly according to any preceding claim in which the radially extending discs are screwed or otherwise secured to the ends of the cylindrical body portion.

7. An assembly according to any one of claims 1 to 6 in which the roller crop processing members comprise non-magnetisable bars and are screwed or otherwise secured to the cylindrical body portion by non-magnetisable parts.

8. An assembly according to claim 7 in which the bars are also made from plastics material.

9. An assembly according to claim 7 or 8 in which the screws or other fasteners engage inserts provided in the cylindrical body portion.

10. An assembly according to any one of claims 7 to 9 in which the roller crop processing members include toothed parts which extend radially beyond the bars and are screwed or secured thereto.

11. An assembly according to any one of claims 7 to 10 in which between each bar is provided an axially extending substantially Z-shaped cross section crop guidance part with each end of the Z-shaped part being secured to a circumferentially adjacent bar.

12. An assembly according to any one of claims 1 to 6 in which the roller crop processing members are formed integrally with the main cylindrical body portion.

13. An assembly according to anyone of claims 1 to 6 in which the roller main cylindrical body portion is provided with axially extending circumferentially spaced valleys, one side of each valley supporting a radially extending crop processing part which is screwed or otherwise secured to the valley side.

14. An assembly according to claim 13 in which the valleys are integrally formed in the main cylindrical body portion.

15. An assembly according to claim 13 in which the valleys are formed by separate valley members which are screwed or other secured to the external surface of the main cylindrical body portion.

16. An assembly according to any preceding claim in which adjacent body members overlap each other circumferentially along their axially extending edges for improved rigidity of the roller.

17. A crop harvesting machine provided with a crop processing roller assembly in accordance with any one of claims 1 to 16.

## Patentansprüche

1. Erntegutverarbeitende Rollenanordnung für eine landwirtschaftliche Erntemaschine, wobei die Anordnung eine Rolle mit einem zylindrischen Grundkörperteil aufweist, das für eine Drehung um eine Lagerwelle gelagert ist, wobei das zylindrische Grundkörperteil aus Kunststoff ausgebildet ist und Erntegutverarbeitungselemente an in Umfangsrichtung beabstandeten Orten um das Grundkörperteil herum trägt, wobei die Anordnung weiterhin ein Fremdkörperdetektionsmittel aufweist, wobei die Rolle innerhalb eines Abtastbereichs des Fremdkörperdetektionsmittels angeordnet ist, wobei jedes Ende des zylindrischen Grundkörperteils der Rolle durch die Welle über eine sich entsprechend radial ersteckende Scheibe gelagert ist, **dadurch gekennzeichnet, dass**
das zylindrische Grundkörperteil eine Reihe sich axial erstreckender und in Umfangsrichtung benachbarter Körperelemente aufweist, die an jedem Ende mit den entsprechenden sich radial erstreckenden Scheiben verbunden sind.

2. Anordnung nach Anspruch 1, wobei das Fremdkörperdetektionsmittel ein nicht drehendes Fremdkörperdetektionsmittel ist, das in dem zylindrischen Grundkörperteil angeordnet ist.

3. Anordnung nach Anspruch 1 oder 2, wobei das zylindrische Grundkörperteil der Rolle aus verstärktem Kunststoff mittels eines Einwickelvorgangs hergestellt wurde, der das Einwickeln von Schichten verstärkten Materials mit zwischengeordnetem Harz aufweist, wobei das resultierende gewickelte Grundkörperteil gehärtet und dann erforderlichenfalls zum Erreichen der geforderten fertigen Form maschinell verarbeitet wird.

4. Anordnung nach Anspruch 1 oder 2, wobei das zylindrische Grundkörperteil der Rolle aus verstärktem Kunststoff hergestellt wurde, indem verstärktes Material in eine Form gegeben und Kunststoff in die Form hinzugegeben wurde, wobei das resultierende geformte Grundkörperteil dann erforderlichenfalls zum Erreichen der geforderten fertige Form maschinell verarbeitet wird.

5. Anordnung nach einem der vorhergehenden Ansprüche, wobei die sich radial erstreckenden Scheiben auch aus Kunststoff ausgebildet sind.

6. Anordnung nach einem der vorhergehenden Ansprüche, wobei die sich radial erstreckenden Scheiben mit den Enden des zylindrischen Grundkörperteils verschraubt oder in anderer Weise an diesen befestigt sind.

7. Anordnung nach einem der Ansprüche 1 bis 6, wobei die Erntegutverarbeitungselemente der Rolle nicht-magnetisierbare Träger aufweisen und mit dem zylindrischen Grundkörperteil verschraubt oder in anderer Weise mittels nicht-magnetisierbarer Teile mit diesem verbunden sind.

8. Anordnung nach Anspruch 7, wobei die Träger auch aus Kunststoff ausgebildet sind.

9. Anordnung nach Anspruch 7 oder 8, wobei die Schrauben oder anderen Verbindungsmittel in in dem zylindrischen Grundkörper vorhandene Einsätze eingreifen.

10. Anordnung nach einem der Ansprüche 7 bis 9, wobei die Erntegutverarbeitungselemente der Rolle verzahnte Teile aufweisen, die sich radial über die Träger hinaus erstrecken und damit verschraubt oder in anderer Weise damit verbunden sind.

11. Anordnung nach einem der Ansprüche 7 bis 10, wobei zwischen jedem Träger ein sich axial erstreckendes Erntegutführungsteil mit einer im Querschnitt im Wesentlichen Z-Form angeordnet ist, wobei jedes Ende des Z-förmigen Teils mit einem in Umfangsrichtung benachbarten Träger verbunden ist.

12. Anordnung nach einem der Ansprüche 1 bis 6, wobei die Erntegutverarbeitungselemente der Rolle einstückig mit dem zylindrischen Grundkörperteil ausgebildet sind.

13. Anordnung nach einem der Ansprüche 1 bis 6, wobei das zylindrische Grundkörperteil der Rolle mit sich axial erstreckenden und in Umfangsrichtung beabstandeten Kehlen versehen ist, wobei eine Seite jeder Kehle ein sich radial erstreckendes Erntegutverarbeitungsteil lagert, das mit der Seite der Kehle verschraubt oder in anderer Weise an dieser befestigt ist.

14. Anordnung nach Anspruch 13, wobei die Kehlen einstückig mit und in dem zylindrischen Grundkörperteil ausgebildet sind.

15. Anordnung nach Anspruch 13, wobei die Kehlen durch separate Kehlenelemente gebildet sind, die mit der äußeren Oberfläche des zylindrischen Grundkörperteils verschraubt oder in anderer Weise mit dieser verbunden sind.

16. Anordnung nach einem der vorhergehenden Ansprüche, wobei für eine verbesserte Steifigkeit der Rolle benachbarte Grundkörperelemente einander in Umfangsrichtung entlang ihrer sich axial erstreckenden Kanten überdecken.

17. Erntemaschine mit einer erntegutverarbeitenden Rollenanordnung nach einem der Ansprüche 1 bis 16.

## Revendications

1. Ensemble de rouleaux de traitement de récoltes destiné à une moissonneuse, l'ensemble comportant un rouleau comprenant une partie de corps cylindrique principale supportée afin de pouvoir tourner autour d'un arbre de support, la partie de corps cylindrique étant formée en une matière plastique et supportant des éléments de traitement de récoltes à des emplacements espacés circonférentiellement autour de la partie de corps, l'ensemble comprenant en outre un moyen de détection d'objets étrangers dans lequel le rouleau est agencé à l'intérieur d'une plage de balayage du moyen de détection d'objets étrangers dans lequel chaque extrémité de ladite partie de corps cylindrique principale de rouleau est supportée à partir de l'arbre par l'intermédiaire d'un disque respectif s'étendant radialement, **caractérisé en ce que** la partie de corps cylindrique principale est construite à partir d'une série d'éléments de corps adjacents circonférentiels s'étendant axialement, qui sont fixés à chaque extrémité sur les disques respectifs s'étendant radialement.

2. Ensemble selon la revendication 1, dans lequel le moyen de détection d'objets étrangers est un moyen de détection d'objet non tournant à l'intérieur de la partie de corps cylindrique.

3. Ensemble selon la revendication 1 ou 2, dans lequel la partie de corps cylindrique principale de rouleau est réalisée en une matière plastique renforcée par un traitement par enroulement impliquant l'enroulement de couches de matériau de renforcement avec de la résine entre deux, la partie de corps enroulée résultante étant durcie et étant ensuite usinée à la forme finie requise, si cela est requis.

4. Ensemble selon la revendication 1 ou 2, dans lequel la partie de corps cylindrique principale de rouleau est réalisée en une matière plastique renforcée par insertion de matériau renforcé dans un moule et ajout de matière plastique dans le moule, la partie de corps moulée résultante étant ensuite usinée à la forme finie requise, si cela est requis.

5. Ensemble selon l'une quelconque des revendications précédentes, dans lequel les disques s'étendant radialement sont aussi réalisés en une matière plastique.

6. Ensemble selon l'une quelconque des revendications précédentes, dans lequel les disques s'étendant radialement sont vissés ou fixés d'une autre manière sur les extrémités de la partie de corps cylindrique.

7. Ensemble selon l'une quelconque des revendications 1 à 6, dans lequel les éléments de rouleaux de traitement de récoltes comprennent des barres ne pouvant être magnétisées et sont vissés ou fixés d'une autre manière sur la partie de corps cylindrique par des pièces ne pouvant être magnétisées.

8. Ensemble selon la revendication 7, dans lequel les barres sont aussi réalisées en matière plastique.

9. Ensemble selon la revendication 7 ou 8, dans lequel les vis ou autres éléments de fixation s'engagent dans des logements prévus dans la partie de corps cylindrique.

10. Ensemble selon l'une quelconque des revendications 7 à 9, dans lequel les éléments de rouleaux de traitement de récoltes comportent des parties dentées qui s'étendent radialement au-delà des barres et sont vissées ou fixées sur celles-ci.

11. Ensemble selon l'une quelconque des revendications 7 à 10, dans lequel, entre chaque barre, est agencée une partie de guidage de récoltes de section transversale en forme de Z s'étendant sensiblement axialement, chaque extrémité de la partie en forme de Z étant fixée sur une barre circonférentiellement adjacente.

12. Ensemble selon l'une quelconque des revendications 1 à 6, dans lequel les éléments de traitement de récoltes de rouleau sont formés de manière unitaire avec la partie de corps cylindrique principale.

13. Ensemble selon l'une quelconque des revendications 1 à 6, dans lequel la partie de corps cylindrique principale des rouleaux comporte des sillons espacés circonférentiellement s'étendant axialement, un côté de chaque sillon supportant une partie de traitement de récoltes s'étendant radialement qui est vissée ou fixée d'une autre manière sur le côté de sillon.

14. Ensemble selon la revendication 13, dans lequel les sillons sont formés de manière unitaire sur la partie de corps cylindrique principale.

15. Ensemble selon la revendication 13, dans lequel les sillons sont formés par des éléments en sillon séparés qui sont vissés ou fixés d'une autre manière sur la surface externe de la partie de corps cylindrique principale.

16. Ensemble selon l'une quelconque des revendications précédentes, dans lequel des éléments de corps adjacents se recouvrent l'un l'autre circonférentiellement suivant leurs bords s'étendant axialement afin d'assurer une rigidité améliorée du rouleau.

17. Moissonneuse comportant un ensemble de rouleaux de traitement de récoltes selon l'une quelconque des revendications 1 à 16.
